# EUROPEAN PATENT SPECIFICATION

(11) **EP 2 268 085 B1**
(45) Date of publication and mention of the grant of the patent: **28.11.2018**
(21) Application number: 08773059.4
(22) Date of filing: 26.06.2008
(51) Int. Cl.: H04W 8/18, H04W 48/18

(54) **A METHOD FOR AUTOMATICALLY SELECTING NETWORK AND A TERMINAL THEREOF**
VERFAHREN ZUM AUTOMATISCHEN AUSWÄHLEN EINES NETZES UND ENDGERÄT DAFÜR
PROCÉDÉ DE SÉLECTION AUTOMATIQUE D'UN RÉSEAU ET TERMINAL CORRESPONDANT

(30) Priority: 17.04.2008 CN 200810089178
(43) Date of publication of application: 29.12.2010
(73) Proprietor: ZTE Corporation, Shenzhen, Guangdong 518057 (CN)
(72) Inventor: ZHONG, Yuanjing, Guangdong 518057 (CN); CHAI, Jun, Guangdong 518057 (CN); WU, Guhe, Guangdong 518057 (CN)
(74) Representative: Ilgart, Jean-Christophe
(86) International application number: PCT/CN2008/071451
(87) International publication number: WO 2009/127101

(56) References cited:
- EP-A1- 1 819 184
- WO-A2-2006/109124
- WO-A2-2006/109159
- WO-A2-2006/109159
- CN-A- 1 535 045
- CN-A- 1 728 876
- CN-A- 1 829 348
- CN-A- 1 968 502
- US-A1- 2004 192 221
- US-A1- 2007 004 405

## Description

### Field of the Invention

The present invention relates to the field of communication, and specifically, to a method for automatically selecting a network and a terminal thereof.

### Background of the Invention

With the continuously development of the 3G network technology, a full domestic commercialization of the 3G network is coming soon. Under the support of numerous operators and countries, the 3G network is internationally under a rational and stable development phase, and more and more users will start to use new personalized services with richer contents brought by the 3G network.

When a mobile terminal leaves the network of the operator of the mobile terminal and enters another country or region, the terminal may be out of the coverage range of the 3G network while enters the coverage range of a 2G network. In view of the comprehensiveness and the completeness of the coverage of the current 2G network, the 2G network and the 3G network may coexist in a certain period in the future.

To solve the compatible problem of the 3G network and the 2G network, a solution on terminal was provided to use a dual-mode manner, which refers to a mobile terminal that can support both the 2G network and the 3G network at the same time, and work in the 2G network or the 3G network according to a network selecting strategy.

With the integration of domestic telecommunication industrial chains, the operators bind service packages using customization of mobile terminal products, and promoting new services will be an important marketing strategy for the data services of the operators during the 3G era. This strategy has become popular internationally for a quite long time. The strategy of the customization of mobile terminals has become a new marketing manner of the global mainstream mobile operators to perform diverse competitiveness and attract new users.

It is a wish of an operator that the mobile terminals customized by it permanently stay in its operated 3G network in the country where the operator belongs, and when the terminal leaves the network of the operator, it can preferentially select the network of another operator having cooperation protocols with the operator, which can provide the user with excellent services and help the user to select more reasonable charges, and this network can be either the 3G network or the 2G network.

During the process of developing the present invention, the inventors find that when leaving the network of the customized operator, the terminal cannot preferentially select the network of an operator having cooperation protocols with the customized operator, which will incur a lot of loss to the customized operator.

WO 2006/109159 A2 discloses a method, apparatus and computer program providing network-associated system priority list for multimode system selection; US 2007/004405 A1 discloses system and method for accelerating network selection by a wireless user equipment (UE) device; WO 2006/109124 A2 discloses method, apparatus and computer program providing for rapid network selection in a multimode device; EP 1819184 A1 discloses method and apparatus for selecting a wireless communication network at a mobile station. US 2004/0192221 A1 discloses a method including the step of selecting a base station based on wireless link quality between base station and wireless terminal.

### Summary of the Invention

The present invention aims at providing a method for automatically selecting a network and a terminal thereof to solve the problem of being unable to control the terminal in selecting an operator to request access.

The invention is set out in the appended set of claims.

The embodiments and/or examples of the following description which are not covered by the appended claims are considered as not being part of the present invention.

In the embodiments of the present invention, a method for automatically selecting a network is provided, comprising: prestoring a Mobile Country Code, MCC, and Mobile Network Code, MNC, list with priority; a terminal acquiring network parameter information; determining that the terminal is located in multiple networks according to the network parameter information; the terminal preferentially requesting to access one network from the multiple networks according to the MNC and MCC list; and the terminal refusing to access some networks according to the MNC and MCC list.

Preferably, each of the preset networks has a priority, the multiple networks comprise multiple preset networks, and the step of the terminal preferentially requesting to access the preset networks from the multiple networks specifically comprises: the terminal selecting the networks having network signal intensities larger than a threshold from the multiple preset networks; and the terminal requesting to access the network with the highest priority from the networks having network signal intensities larger than the threshold.

Preferably, the step of the terminal refusing to access some networks according to the MNC and MCC list specifically comprises: if the network parameter information acquired by the terminal is a refusal network in the list, the terminal refusing to access even the network signal intensity is larger than the threshold.

Preferably, the terminal is a dual-mode terminal, and the method further comprises: if the terminal preferentially requests to access the preset network which is a 2G network, it selects the 2G network and requests to access after network mode switching.

Preferably, the levels of the priority are set by the operator according to the cooperation relationships between it and operators of the preset networks.

In the embodiments of the present invention, a terminal is also provided, comprising: an acquiring module, configured to acquire network parameter information; a network determining module, configured to determine that the terminal is located in multiple networks according to the network parameter information; and a selecting module, configured to preferentially request to access a preset network from the multiple networks.

Preferably, each of the preset networks has a priority, the multiple networks comprise multiple preset networks, and the selecting module further comprises: a network selecting module, configured to select the networks having network signal intensities larger than a threshold from the multiple preset networks; and a requesting access module, configured to request to access the network with the highest priority from the networks having network signal intensities larger than the threshold.

Preferably, the terminal further comprises: a storing module, configured to store the country code, the network code and the priority of each preset network.

Preferably, the levels of the network priority stored by the storing module are set by the operator according to the cooperation relationships between it and operators of the preset networks.

Preferably, the terminal is a dual-mode terminal, and the terminal further comprises: a switching module, configured to, if the dual-mode terminal preferentially requests to access the preset network which is a 2G network, select the 2G network and request to access after network mode switching.

By the present invention, selecting a network according to a preset priority overcomes the problem of being unable to control a mobile terminal in selecting a specific network to request access, and thus the mobile terminal can preferentially select to access the specific network so as to provide services meeting quality requirements to the operators and the terminals.

### Brief Description of the Drawings

The accompanying drawings herein are used to provide further understanding of the present invention and constitute a part of the present application. The illustrative embodiments of the present invention and the explanation thereof are used to explain the present invention and do not constitute improper limitations on the present invention. In the accompanying drawings:
Figure 1 is a flow chart of the method for automatically selecting a network according to an embodiment of the present invention;
Figure 2 is a flow chart of the method for automatically selecting a network according to the preferable embodiment 1 of the present invention;
Figure 3 is a flow chart of the method for automatically selecting a network according to the preferable embodiment 2 of the present invention; and
Figure 4 is a block diagram of the terminal according to an embodiment of the present invention.

### Detailed Description of the Embodiments

The present invention will be described in detail hereinafter with reference to the drawings and in conjunction with the embodiments.

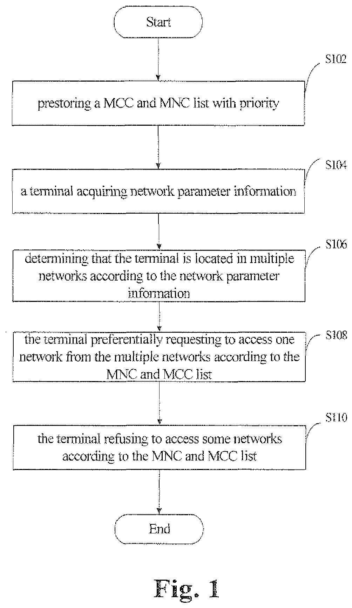

As shown in Figure 1, a method for automatically selecting a network is provided according to the embodiment of the present invention, comprising the following steps:
step S102, prestoring a Mobile Country Code (MCC) and Mobile Network Code (MNC) list with priority;
step S104, a terminal acquiring network parameter information;
step S106, determining that the terminal is located in multiple networks according to the network parameter information;
step S108, the terminal preferentially requesting to access one network from the multiple networks according to the MNC and MCC list; and
step S110, the terminal refusing to access some networks according to the MNC and MCC list.

Through this embodiment, the terminal is able to access a specific network according to the pre-stored network information and preferentially select to access the specific network, so as to provide services meeting quality requirements to the operators and users.

Preferably, each of the preset networks has a priority, multiple networks comprise multiple preset networks, and the step of the terminal preferentially requesting to access the preset networks from the multiple networks specifically comprises: the terminal selecting the networks having network signal intensities larger than a threshold from the multiple preset networks; and the terminal requesting to access the network with the highest priority from the networks having network signal intensities larger than the threshold.

Through this embodiment, the terminal selects the network with higher quality of network signal from the multiple preset networks and requests to access, which can improve the call quality of the terminal.

Preferably, the levels of the priority are set by the operator according to the cooperation relationships between it and operators of the preset networks.

Through this embodiment, the operator is able to control the terminal in requesting to access a specific network.

Preferably, the terminal is a dual-mode terminal, and the method further comprises: if the dual-mode terminal preferentially requests to access the preset network which is a 2G network, it selects a 2G network and requests to access after network mode switching.

Through this embodiment, the operator is able to control the dual-mode mobile terminal in accessing a specific 2G network.

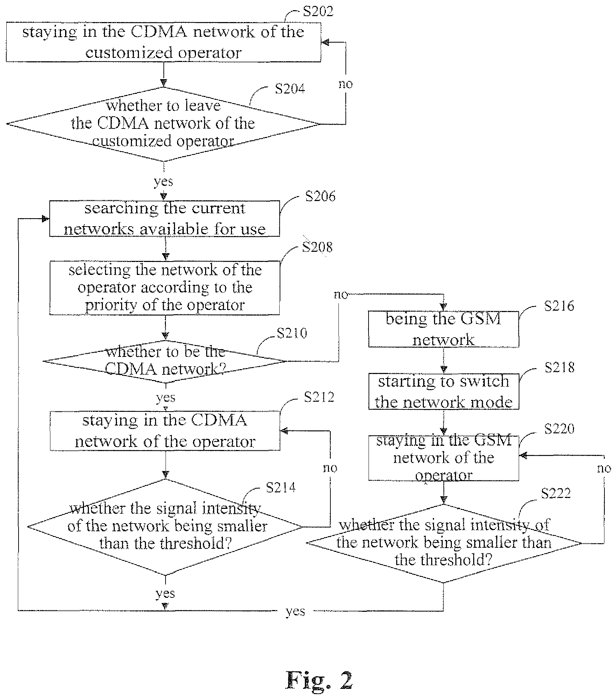

Figure 2 is a flow chart of the method for automatically selecting a network according to the preferable embodiment 1 of the present invention, and the dual-mode terminal moves from a CDMA (3G) network of a customized operator to the network of a non-customized operator, and as shown in Figure 2, the following steps are included:
step S202, the terminal stays in the CDMA network of the customized operator and monitors the signal of the network at the same time;
step S204, when the terminal has detected that the C/I ratio and the Received Signal Code Power (RSCP) of the signal intensity of the CDMA network where the terminal stays are smaller than a preset threshold within a certain period, it is judged that the terminal has left the coverage area of the CDMA network of the customized operator;
step S206, the terminal searches the current networks available for use, and acquires the MCC and the MNC of the searched networks;
step S208, the terminal selects the networks whose signal intensity RSCP and C/I are larger than the preset threshold from the searched multiple networks, and matches the selected networks meeting the threshold with the priority list of the operators, the priority list is a priority list of the MCC and the MNC of the networks of the non-customized operators preset by the customized operator, and the terminal selects the network of the operator with the highest priority from the networks meeting the threshold;
step S210, judging whether the network of the operator with the highest priority is the CDMA network: if it is, step S212 is executed; and if it is not, step S216 is executed;
step S212, the terminal stays in the CDMA network of the operator with the highest priority and is in a standby mode;
step S214, the terminal judges whether the signal intensity RSCP and C/I of the CDMA network where it stays are smaller than the preset threshold within a certain period: if they are, step S206 is re-executed; if they are not, the terminal continues staying in the CDMA network;
step S216 to step S220, the network of the operator with the highest priority is a GSM (2G) network, and the terminal starts mode conversion and stays in the GSM network; and
step S222, the terminal judges whether the signal intensity RSCP and C/I of the GSM network where it stays are smaller than the preset threshold within a certain period: if they are, step S206 is re-executed; if they are not, the terminal continues staying in the GSM network.

When the network of the customized operator cannot cover the terminal, a specific operator network will provide services which can be either the 3G network or the 2G network; also, since the terminal only searches the signal of another network in the situation that the signal of the standby network cannot meet requirements, the system load due to frequent network switching by the terminal is avoided and the huge power consumption of the terminal is alleviated.

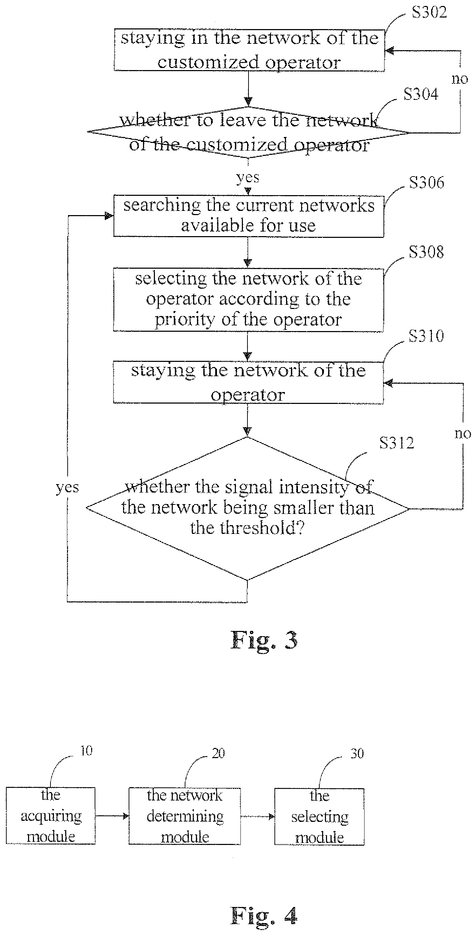

Figure 3 is a flow chart of the method for automatically selecting a network according to the preferable embodiment 2 of the present invention. A single mode terminal moves from the network of the customized operator to the network of the non-customized operator, and as shown in Figure 3, the following steps are included:
step S302, the single mode mobile terminal stays in the network of the customized operator and monitors the signal of the network at the same time;
step S304, when the single mode terminal has detected that the C/I ratio and the RSCP of the signal intensity of the network where the terminal stays are smaller than the preset threshold within a certain period, it is judged that the terminal has left the coverage area of the network of the customized operator;
step S306, the single mode terminal searches the current networks available for use, and acquires the MCC and the MNC of the searched networks;
step S308, the single mode terminal selects the networks whose signal intensity RSCP and C/I are larger than the preset threshold from the searched multiple networks, and matches the selected networks meeting the threshold with the priority list of the operators, the priority list is a priority list of the MCC and the MNC of the networks of the non-customized operators preset by the customized operator, and the single mode terminal selects the network of the operator with the highest priority from the networks meeting the threshold;
step S310, the single mode terminal stays in the network of the operator with the highest priority and is in standby mode; and
step S312, the single mode terminal judges whether the signal intensity RSCP and C/I of the network where it stays are smaller than the preset threshold within a certain period: if they are, step S306 is re-executed; if they are not, the single mode terminal continues staying in the network.

In this embodiment, the modes of the networks provided by the customized operator and the non-customized operator are consistent with each other, and the terminal does not perform the mode conversion and thus the mobile terminal can be a single mode terminal, and when the network of the customized operator cannot cover the terminal, the specific operator network will provide services; also, since the terminal only searches the signal of another network in the situation that the signal of the standby network cannot meet requirements, the system load due to frequent network switching by the terminal is avoided and the huge power consumption of the terminal is alleviated.

As shown in Figure 4, a terminal is also provided according to the embodiment of the present invention, comprising: an acquiring module 10, configured to acquire network parameter information; a network determining module 20, connected to the acquiring module and configured to determine that the terminal is located in multiple networks according to the network parameter information; and a selecting module 30, connected to the network determining module and configured to preferentially request to access the preset network from the multiple networks.

Preferably, each of the preset networks has a priority, the multiple networks comprise multiple preset networks, and the selecting module further comprises: a network selecting module (not shown in the figure), configured to select the networks having network signal intensities larger than the threshold from the multiple preset networks; and a requesting access module (not shown in the figure), connected to the network selecting module and configured to request to access the network with the highest priority from the networks having network signal intensities larger than the threshold.

Preferably, the terminal further comprises: a storing module (not shown in the figure), configured to store the MCC, the MNC and the priority of each preset network. Also preferably, the levels of the network priority stored by the storing module are set by the operator according to the cooperation relationships between it and operators of the preset networks.

Preferably, the terminal is a dual-mode terminal, and the terminal further comprises: a switching module (not shown in the figure), configured to, if the dual-mode terminal preferentially requests to access the preset network which is the 2G network, select the 2G network and request to access after network mode switching.

Owing to the above description, the method for automatically selecting the network and the terminal thereof provided by the embodiments of the present invention enable the terminal to preferentially select to access the specific network by selecting the network according to the preset priority, so as to provide services meeting quality requirements to the operators and users; also, since the terminal only searches the signal of another network in the situation that the signal of the standby network cannot meet requirements, the system load due to frequent network switching by the terminal is avoided and the huge power consumption of the terminal is alleviated.

Obviously, one skilled in the art shall understand that various modules and steps described above can be realized with general computing devices and can be integrated into one single computing device or distributed within a network consisting of multiple computing devices, and alternatively, the various modules and steps described above can be realized with the program codes executable by the computing devices, and thus these program codes can be stored in a memory devices so as to be executed by the computing devices, or the various modules and steps described above can be formed into individual integrated circuit modules, or a plurality of the modules or steps can be formed into a single integrated circuit module so as to be realized. Therefore, the present invention is not limited to combination of any particular hardware or software.

## Claims

1. A method, performed by a mobile terminal, for automatically selecting a a network, the method comprising the following steps:
prestoring a Mobile Country Code, MCC, and Mobile Network Code, MNC, list with priority (S102);
acquiring network parameter information (S104);
determining that the mobile terminal is located in multiple networks according to the network parameter information (S106), the multiple networks comprising preset networks;
prioritizing to request to access a preset network from the multiple networks according to the MNC and MCC list (S108), wherein each of the preset networks has a priority, and wherein the step of prioritizing further comprises: selecting the networks having network signal intensities larger than a threshold from the multiple preset networks; and requesting to access the network with the highest priority from the networks having network signal intensities larger than the threshold; and
refusing to access some networks according to the MNC and MCC list (S110).

2. The method according to claim 1, wherein the step of refusing to access some networks according to the MNC and MCC list further comprises: if the network parameter information acquired by the mobile terminal is a refusal network in the list, refusing to access even if the network signal intensity is larger than the threshold.

3. The method according to claim 1, wherein the levels of the priority are set by the operator according to the cooperation relationships between it and operators of the preset networks.

4. The method according to claim 3, wherein the mobile terminal is a dual-mode mobile terminal and the method further comprises:
if the dual-mode mobile terminal prioritizes to request to access the preset network which is a 2G network, it selects the 2G network and requests to access after network mode switching.

5. A mobile terminal comprising:
a storing module, configured to prestore a Mobile Country Code, MCC, and a Mobile Network Code, MNC, list with priority;
an acquiring module (10), configured to acquire network parameter information;
a network determining module (20), configured to determine that the mobile terminal is located in multiple networks according to the network parameter information, the multiple networks comprising multiple preset networks;
a selecting module (30), configured to prioritize to request to access a preset network from the multiple networks and refuse to access some networks according to the MNC and MCC list, wherein each of the preset networks has a priority, and the selecting module further comprises: a network selecting module, configured to select the networks having network signal intensities larger than a threshold from the multiple preset networks; and a requesting access module, configured to request to access the network with the highest priority from the networks having network signal intensities larger than the threshold.

6. The mobile terminal according to claim 5, wherein the levels of the network priority stored by the storing module are set by the operator according to the cooperation relationships between it and operators of the preset networks.

7. The mobile terminal according to claim 6, wherein the mobile terminal is a dual-mode terminal, and wherein the mobile terminal further comprises:
a switching module, configured to, if the dual-mode mobile terminal prioritizes to request to access the preset network which is a 2G network, select the 2G network and request to access after network mode switching.

## Patentansprüche

1. Verfahren, das durch ein mobiles Terminal durchgeführt wird, zum automatischen Auswählen eines Netzwerkes, wobei das Verfahren die folgenden Schritte umfasst:
Vorabspeichern einer Liste mit Priorität (S102) eines Mobile Country Codes (MCC) und eines Mobile Network Codes (MNC),
Erfassen von Netzwerkparameterinformation (S104);
Bestimmen, dass das mobile Terminal in mehreren Netzwerken gemäß der Netzwerkparameterinformation (S106) angeordnet ist, wobei die mehreren Netzwerke voreingestellte Netzwerke umfassen;
Priorisieren der Anfrage auf Zugriff eines voreingestellten Netzwerks von den mehreren Netzwerken entsprechend der MNC- und MCC-Liste (S108), wobei jedes der voreingestellten Netzwerke eine Priorität hat, und wobei
der Schritt des Priorisierens des Weiteren umfasst:
Auswählen der Netzwerke mit einer Netzwerksignalstärke größer als ein Schwellwert aus der Mehrzahl voreingestellter Netzwerke, und
Anfordern des Zugriffs auf das Netzwerk mit der höchsten Priorität von den Netzwerken mit Netzwerksignalstärken größer als der Schwellwert; und
Ablehnen des Zugriffs einiger Netzwerke entsprechend der MNC- und MCC-Liste (S110).

2. Verfahren nach Anspruch 1, bei dem der Schritt des Ablehnens des Zugriffs auf einige Netzwerke entsprechend der MNC- und MCC-Liste des Weiteren umfasst:
wenn die Netzwerkparameterinformation, die durch das mobile Terminal erhalten wird, ein abzulehnendes Netzwerk der Liste ist, Ablehnen des Zugriffs auch dann, wenn die Netzwerksignalintensität größer als der Schwellwert ist.

3. Verfahren nach Anspruch 1, wobei die Pegel der Priorität durch den Bediener entsprechend der Kooperationsbeziehungen zwischen diesem und den Betreibern der voreingestellten Netzwerke eingestellt wird.

4. Verfahren nach Anspruch 3, bei dem das mobile Terminal ein mobiles Dual-Mode-Terminal ist, und wobei das Verfahren des Weiteren umfasst:
wenn das mobile Dual-Mode-Terminal Priorität auf die Anfrage zum Zugriff auf das voreingestellte Netzwerk gibt, das ein 2G-Netzwerk ist, es das 2G-Netzwerk auswählt und Zugriff anfordert, nachdem der Netzwerkmodus umgeschaltet ist.

5. Mobiles Terminal mit:
einem Speichermodul, das ausgestaltet ist, um eine Liste mit Prioritäten eines Mobilen Country Codes MCC, und eines Mobile Network Codes MNC, im Voraus zu speichern;
einem Erfassungsmodul (10), das ausgestaltet ist, um Netzwerkparameterinformation zu erfassen;
einem Netzwerkbestimmungsmodul (20), das ausgestaltet ist, um festzulegen, dass das mobile Terminal in mehreren Netzwerken gemäß der Netzwerkparameterinformation angeordnet ist, wobei die mehreren Netzwerke mehrere voreingestellte Netzwerke umfassen;
einem Auswahlmodul (30), das ausgestaltet ist, um die Anforderung zum Zugriff auf eines der voreingestellten Netzwerke aus den mehreren Netzwerken zu priorisieren, und den Zugriff auf einige Netzwerke abzulehnen, entsprechen der MNC- und MCC-Liste, wobei jedes der voreingestellten Netzwerke eine Priorität hat,
und wobei das Auswahlmodul des Weiteren umfasst:
ein Netzwerkauswahlmodul, das ausgestaltet ist, um die Netzwerke mit Netzwerksignalstärken größer als ein Schwellwert aus den mehreren voreingestellten Netzwerken auszuwählen, und ein Anforderungszugriffsmodul, das ausgestaltet ist, um Zugriff auf das Netzwerk mit der höchsten Priorität von den Netzwerken anzufordern, die Netzwerkintensitäten größer als den Schwellwert haben.

6. Mobiles Terminal nach Anspruch 5, bei dem die Pegel der Netzwerkpriorität, die in dem Speichermodul gespeichert sind, durch den Benutzer entsprechend der Kooperationsbeziehung zwischen ihm und dem Betreiber der voreingestellten Netzwerke eingestellt wird.

7. Mobiles Terminal nach Anspruch 6, bei dem das mobile Terminal ein Dual-Mode-Terminal ist, und wobei das mobile Terminal des Weiteren umfasst:
ein Umschaltmodul, das ausgestaltet ist, um, wenn das mobile Dual-Mode-Terminal Priorität auf die Anfrage zum Zugriff auf das voreingestellte Netzwerk gibt, das ein 2G-Netzwerk ist, das 2G-Netzwerk ausgewählt wird und die Anfrage für den Zugriff nach dem Umschalten des Netzwerkmodus ausgeführt wird.

## Revendications

1. Procédé, effectué par un terminal mobile, pour sélectionner automatiquement un réseau, le procédé comprenant les étapes suivantes :
mémoriser préalablement une liste de code de pays mobile, MCC, et de code de réseau mobile, MNC, avec une priorité (S102) ;
acquérir des informations de paramètre de réseau (S104) ;
déterminer le fait que le terminal mobile est situé dans de multiples réseaux en fonction des informations de paramètre de réseau (S106), les multiples réseaux comprenant des réseaux préréglés ;
prioriser une demande d'accès à un réseau préréglé parmi les multiples réseaux en fonction de la liste de MNC et de MCC (S108), dans lequel chacun des réseaux préréglés comporte une priorité, et dans lequel l'étape de la priorisation comprend en outre : la sélection des réseaux ayant des intensités de signal de réseau supérieures à un seuil parmi les multiples réseaux préréglés ; et la demande d'accès au réseau avec la plus grande priorité parmi les réseaux ayant des intensités de signal de réseau supérieures au seuil ; et
refuser l'accès à certains réseaux en fonction de la liste de MNC et de MCC (S110).

2. Procédé selon la revendication 1, dans lequel
l'étape du refus de l'accès à certains réseaux en fonction de la liste de MNC et de MCC comprend en outre :
si les informations de paramètre de réseau acquises par le terminal mobile sont un refus de réseau dans la liste, le refus de l'accès même si l'intensité de signal de réseau est supérieure au seuil.

3. Procédé selon la revendication 1, dans lequel les niveaux de la priorité sont réglés par l'opérateur en fonction des relations de coopération entre celui-ci et des opérateurs des réseaux préréglés.

4. Procédé selon la revendication 3, dans lequel le terminal mobile est un terminal mobile à double mode, et le procédé comprend en outre :
si le terminal mobile à double mode priorise la demande d'accès au réseau préréglé qui est un réseau 2G, il sélectionne le réseau 2G et il demande l'accès après une commutation de mode de réseau.

5. Terminal mobile comprenant :
un module de mémorisation configuré pour la mémorisation préalable d'une liste de code de pays mobile, MCC, et de code de réseau mobile, MNC, avec une priorité ;
un module d'acquisition (10) configuré pour l'acquisition d'informations de paramètre de réseau ;
un module de détermination de réseau (20) configuré pour la détermination que le terminal mobile est situé dans de multiples réseaux en fonction des informations de paramètre de réseau, les multiples réseaux comprenant de multiples réseaux préréglés ;
un module de sélection (30) configuré pour la priorisation d'une demande d'accès à un réseau préréglé parmi les multiples réseaux et le refus de l'accès à certains réseaux en fonction de la liste de MNC et de MCC, dans lequel chacun des réseaux préréglés comporte une priorité, et le module de sélection comprend en outre : un module de sélection de réseau configuré pour la sélection des réseaux ayant des intensités de signal de réseau supérieures à un seuil parmi les multiples réseaux préréglés ; et un module de demande d'accès configuré pour la demande d'accès au réseau avec la plus grande priorité parmi les réseaux ayant des intensités de signal de réseau supérieures au seuil.

6. Terminal mobile selon la revendication 5, dans lequel les niveaux de la priorité de réseau mémorisés par le module de mémorisation sont réglés par l'opérateur en fonction des relations de coopération entre celui-ci et des opérateurs des réseaux préréglés.

7. Terminal mobile selon la revendication 6, dans lequel le terminal mobile est un terminal mobile à double mode, et dans lequel le terminal mobile comprend en outre :
un module de commutation configuré pour, si le terminal mobile à double mode priorise la demande d'accès au réseau préréglé qui est un réseau 2G, la sélection du réseau 2G et la demande de l'accès après une commutation de mode de réseau.
